# EUROPÄISCHE PATENTSCHRIFT

(11) **EP 2 684 093 B1**
(45) Veröffentlichungstag und Bekanntmachung des Hinweises auf die Patenterteilung: **09.05.2018**
(21) Anmeldenummer: 12712534.2
(22) Anmeldetag: 06.03.2012
(51) Int. Cl.: B44F 1/06, G02B 27/60, B23K 26/18, B41M 5/26, B44C 1/22, C03C 23/00, B23K 26/00, B23K 26/0622

(54) **LASERMARKIERTER GEGENSTAND MIT MOIRE-MUSTER**
LASER-MARKED ARTICLE
OBJET MARQUÉ AU LASER

(30) Priorität: 07.03.2011 AT 3012011
(43) Veröffentlichungstag der Anmeldung: 15.01.2014
(73) Patentinhaber: D. Swarovski KG, 6112 Wattens (AT)
(72) Erfinder: SCHAUR, Helmut, A-6067 Absam (AT); FUCHS, Helmut, A-6060 Hall in Tirol (AT)
(74) Vertreter: Moore, Michael Richard
(86) Internationale Anmeldenummer: PCT/AT2012/000051
(87) Internationale Veröffentlichungsnummer: WO 2012/119164

(56) Entgegenhaltungen:
- EP-A1- 1 845 496
- EP-A2- 0 219 011
- EP-A2- 1 780 039
- EP-A2- 2 085 702
- WO-A1-01/68385
- DE-A1- 4 407 547
- DE-A1-102005 039 430
- DE-A1-102007 004 524
- DE-A1-102008 038 990
- US-A- 4 662 653
- Anonymous: "Polyvinylchlorid - Wikipedia", , 22 February 2010 (2010-02-22), XP055253844, Retrieved from the Internet: URL:https://web.archive.org/web/2010022203 4053/http://de.wikipedia.org/wiki/Polyviny lchlorid [retrieved on 2016-02-29]

## Beschreibung

Die Erfindung betrifft einen Gegenstand, der als homogener Körper ausgebildet ist uns aus einem für sichtbares Licht transparenten sprödharten Material, insbesondere aus Glas, besteht, wobei der Gegenstand wenigstens zwei durch die Methode der Laserinnenmarkierung erzeugte, mit dem menschlichen Auge erkennbare, leicht milchige Rasterstrukturen aufweist. Weiters soll ein Verfahren zur Herstellung des erfindungsgemäßen Gegenstandes angegeben werden.

Die Gegenstände, um die es bei der Erfindung geht, weisen im transparenten oder transluzenten Bereich eine Lasermarkierung auf. Vorzugsweise handelt es sich um dekorative Gegenstände, denen vor allem im Schmuckbereich, als Dekorationsgegenständen in Wohnräumen oder beispielsweise auch als Namensschildern eine wirtschaftliche Bedeutung beigemessen wird.

Unter transparenten Materialien seien im Folgenden Materialien verstanden, die für elektromagnetische Wellen, deren Wellenlängen im sichtbaren Bereich liegen, durchlässig sind. Diese Eigenschaft schließt aber nicht die Tatsache aus, dass die Materialien mit Hilfe von Lasergravurmethoden, wie z.B. der Laserinnenmarkierung, bearbeitbar sind, wobei die Wellenlängen der dabei zum Einsatz kommenden Laser im Bereich UV (Abkürzung von "Ultraviolett") bis IR (Abkürzung von "Infrarot") liegen und damit über den Bereich des sichtbaren Lichts hinausgehen können.

Zu den transparenten Materialien, die im Kontext der Erfindung relevant sind, zählen bevorzugt transparente sprödharte Materialien, wie beispielsweise bestimmte Arten von Glas (z.B. Kristallglas), von Edelsteinen, von Diamanten oder von Diamantimitationen, z.B. aus (Kubik) Zirkonia.

Die genannte Methode der Laserinnenmarkierung, z.B. von Glas, ist schon lange bekannt. In diesem Zusammenhang sei auf die Patentschrift US 5,206,496 verwiesen. Zusammenfassend gesagt wird bei dieser Methode ein auf die Glasoberfläche gerichteter Laserstrahl verwendet, der den Glaskörper bis zu einer vorbestimmten Tiefe, bei der die Markierung erfolgen soll, durchdringt, dort fokussierbar ist und bei ausreichend großer Intensität eine mit dem menschlichen Auge erkennbare, leicht milchige Materialveränderung hervorruft, ohne dass dabei die Glasoberfläche verändert wird. Im Grenzfall kann die Markierung natürlich auch auf der Glasoberfläche selber erfolgen.

Nachteilig dabei ist, dass die mit Hilfe dieser Methode erzeugten Markierungen ein starres Erscheinungsbild aufweisen.

Es sind aus dem Stand der Technik vereinzelte Ansätze bekannt, diesen Nachteil zu vermeiden. So wird in der EP 0 219 011 A2 vorgeschlagen, Ausweiskarten mit einem sich unter Änderung des Betrachtungswinkels variablen Erscheinungsbild mittels Lasermarkierung zu erzeugen. Hierzu werden zwei sich überlagernde Markierungen an der Ober- und Unterseite der Ausweiskarte angebracht, was wiederum nachteilig ist, da mit an der Oberfläche eines Gegenstandes erzeugten Lasermarkierungen immer eine Rillenbildung einhergeht, wobei sich diese Rillen früher oder später mit Schmutz zusetzen. Das hat negative Auswirkungen auf das Erscheinungsbild. Außerdem ist es bei der in der EP 0 219 011 A2 vorgeschlagenen Lösung nicht möglich, die sich überlagernden Markierungen auch völlig unterschiedlich auszubilden, wodurch der Gestaltungsspielraum stark eingeschränkt ist.

Die DE 10 2007 004 524 A1 zeigt ein Verfahren zur Erzeugung einer sichtbaren Struktur aus mehreren Gravurpunkten, wobei die Gravurpunkte in einer Ebene angeordnet sind.

Die EP 1 845 496 A1, die EP 1 780 039 A2 und die US 4,662,653 zeigen mehrschichtige Sicherheitselemente mit einem Moire-Muster.

Die DE 44 07 547 A1 zeigt einen Gegenstand, welcher in seinem Inneren eine Lasermarkierung, die aus einzelnen Punkten zusammengesetzt ist, aufweist.

Die DE 10 2008 038 990 A1 offenbart eine Identifikationskarte mit einem speziell ausgebildeten Sicherheitsmerkmal.

Die DE 10 2005 039 430 A1 bezieht sich auf ein Verfahren zur Erzeugung einer unter der Oberfläche liegenden Markierung in einem transparenten Körper.

Die EP 2 085 702 A2 offenbart ein Hausgerät mit einer Abdeckplatte aus Glaskeramik, in welche eine Markierung in Form einer zwei- oder dreidimensionalen Laser-Innengravur eingebracht ist.

Die WO01/68385 A1 zeigt eine Glasplatte mit einem Moire-Muster.

Die Aufgabe der vorliegenden Erfindung besteht darin, die vorbeschriebenen Nachteile zu vermeiden, und gegenüber dem Stand der Technik verbesserte Gegenstände mit Lasermarkierungen, die (bei einer leichten Änderung des Blickwinkels und/oder des Winkels der einfallenden Lichtstrahlen) ein dynamisches und/oder einen räumlichen Eindruck erweckendes Erscheinungsbild haben, anzugeben.

Dies wird beim erfindungsgemäßen Gegenstand durch die Merkmale des Anspruchs 1 gelöst.

Obwohl es sich beim Moire-Effekt, der für das Zustandekommen von Moire-Mustern verantwortlich ist, um ein allgemein bekanntes Phänomen handelt, sei er an dieser Stelle noch einmal definiert: Der Moire-Effekt ist ein optischer Interferenzeffekt, der durch die Überlagerung feiner, z.B. gitterförmiger, Rasterstrukturen zustande kommt.

Unter einem "dynamischen" Moire-Muster sei ein Moire-Muster verstanden, das sich bei einer leichten Änderung des Blickwinkels und/oder des Winkels der einfallenden Lichtstrahlen dynamisch verändert. Das ist nur möglich, wenn die beiden Rasterstrukturen zumindest bereichsweise voneinander getrennt sind. Würden sie überall direkt aufeinander liegen, so ergäbe sich nur ein starres Moire-Muster, das sich bei einer leichten Änderung des Blickwinkels und/oder des Winkels der einfallenden Lichtstrahlen nicht verändert. Mit dem Zusatz "visuell" bei "voneinander getrennt" sei der Tatsache Rechnung getragen, dass sich die mit Hilfe von Lasergravurmethoden erzielbaren Materialveränderungen nicht klar eingrenzen lassen. Sie bestehen typischerweise aus einem visuellen, d.h. mit dem menschlichen Auge (z.B. unter einem Mikroskop) erkennbaren Kernbereich und zusätzlichen Artefakten, die erst mit Hilfe spezieller Abbildungsmethoden sichtbar werden. Für die vorliegende Erfindung spielen im Wesentlichen nur die Kernbereiche eine Rolle.

Eine Grundidee der Erfindung besteht also darin, mit Hilfe der Methode der Lasermarkierung wenigstens zwei Rasterstrukturen zu erzeugen, deren Überlagerung ein dynamisches Moire-Muster ergibt. Dabei ist es erfindungsgemäß vorgesehen, dass sich die Rasterstrukturen in verschiedenen Schichten im Inneren des Gegenstands befinden. Unter dem Begriff "Schicht" sei eine flächenhafte Ausdehnung endlicher Dicke verstanden, wobei eine solche Schicht gekrümmt ist.

In einem vorteilhaften Ausführungsbeispiel stellen die Umrisse der Rasterstrukturen und damit der Umriss des gesamten Moire-Musters ein Motiv dar, wobei dieses Motiv auch aus mehreren, räumlich voneinander getrennten Teilen zusammengesetzt sein kann. Als Beispiele seien Tiere, Himmelskörper, Buchstaben, daraus zusammengesetzte Schriftzüge, Firmensymbole und Logos genannt.

Erfindungsgemäß ist es vorgesehen, dass 1. die Rasterstrukturen identisch ausgebildet sind, und/ dass 2. eine der Rasterstrukturen aus wenigstens zwei Segmenten mit einer unterschiedlichen Rasterung, und/oder 3. mit einer gleichen, aber gegeneinander gedrehten Rasterung, und/oder 4. mit einer gleichen, aber gegeneinander verschobenen Rasterung besteht. Bei den ersten drei Alternativen kann ein dynamisch - stufenloses, bei der vierten Alternative ein dynamisch - sprunghaftes Erscheinungsbild hervorgerufen werden. Darüber hinaus besteht ein weiterer Vorteil der Alternativen 2 und 3 darin, dass (wenn der Umriss des Moire-Musters ein Motiv darstellt) man mit ihrer Hilfe diesem Motiv eine Innenstruktur verleihen kann. Dadurch lässt sich ein räumlicher Eindruck erwecken, obwohl es sich eigentlich nur um ein zweidimensionales Motiv handelt.

Erfindungsgemäß ist es weiterhin vorgesehen, dass die Rasterstrukturen aus Linien bestehen. Vorzugsweise sind sie äquidistant zueinander angeordnet. Es sind aber auch Ausführungsformen möglich, bei denen der Abstand der Mitten zweier benachbarter Linien in einer vorbestimmten Weise variiert, z.B. einer bestimmten mathematischen Funktion folgt.

Als besonders vorteilhaft hat es sich herausgestellt, dass das Verhältnis der Spurweite einer Linie zum Abstand der Mitten zweier benachbarter Linien zwischen 1:1,5 und 1:10 liegt. Vorzugsweise beträgt das Verhältnis 1:3,5 und/oder ist die Spurweite einer Linie kleiner oder gleich 15 Mikrometer.

Es ist vorteilhaft, bei der Herstellung des erfindungsgemäßen Gegenstandes die Rasterstrukturen mit Hilfe eines gepulsten Lasers zu erzeugen. Hier eignen sich z.B. handelsübliche Festkörperlaser mit Pulsdauern im Bereich einiger Nanosekunden und UV-Wellenlängen oder handelsübliche Ultrakurzpulslaser mit Pulsdauern im Bereich einiger Piko- oder Femtosekunden und Wellenlängen im Bereich UV bis IR, vorteilhafterweise in einem Bereich von ca. 300 nm bis 550 nm. Eine fertigungstechnische Konsequenz, die sich aus der Verwendung gepulster Laser ergibt, besteht darin, dass die einzelnen Linien, aus welchen die Rasterstrukturen beispielsweise bestehen können, nacheinander aus einzelnen Punkten zusammengesetzt werden müssen. Diese Tatsache hat aber keine negativen Auswirkungen auf das Erscheinungsbild des Moire-Musters.

Gemäß einer weiteren vorteilhaften Vorgehensweise bei der Herstellung des erfindungsgemäßen Gegenstandes werden die Rasterstrukturen nacheinander, und zwar jeweils im Fokus des Laserstrahls, erzeugt.

Weitere Einzelheiten und Vorteile der vorliegenden Erfindung werden anhand der Figurenbeispiele unter Bezugnahme auf die in den Zeichnungen dargestellten Ausführungsbeispiele im Folgenden näher erläutert. Dabei zeigt:
- Fig. 1a: eine perspektivische Ansicht eines ersten schematisch dargestellten bevorzugten Ausführungsbeispiels des erfindungsgemäßen Gegenstandes,
- Fig. 1b: einen Querschnitt des ersten schematisch dargestellten bevorzugten Ausführungsbeispiels des erfindungsgemäßen Gegenstandes,
- Fig. 2: einen Querschnitt eines zweiten nicht-erfindungsgemäßen Ausführungsbeispiels,
- Fig. 3: einen Querschnitt eines dritten nicht-erfindungsgemäßen Ausführungsbeispiels,
- Fig. 4a: die Draufsicht einer ersten schematisch dargestellten beispielhaften Rasterstruktur,
- Fig. 4b: ein Moire-Muster, das durch Überlagerung der ersten beispielhaften Rasterstruktur zustande kommt,
- Fig. 5: die Draufsicht einer zweiten schematisch dargestellten beispielhaften Rasterstruktur,
- Fig. 6: die Draufsicht einer dritten schematisch dargestellten beispielhaften Rasterstruktur,
- Fig. 7a: die Draufsicht einer vierten schematisch dargestellten beispielhaften Rasterstruktur,
- Fig. 7b: die Draufsicht einer fünften schematisch dargestellten beispielhaften Rasterstruktur,
- Fig. 8a: die Draufsicht einer sechsten schematisch dargestellten beispielhaften Rasterstruktur,
- Fig. 8b: die Draufsicht einer siebten schematisch dargestellten beispielhaften Rasterstruktur,
- Fig. 9a: ein Moire-Muster, das durch Überlagerung der sechsten und der siebten beispielhaften Rasterstruktur zustande kommt und
- Fig. 9b: ein Moire-Muster, das (im Vergleich zu dem in Fig. 9a gezeigten Moiré-Muster) durch eine leicht geänderte Überlagerung der sechsten und der siebten beispielhaften Rasterstruktur zustande kommt.

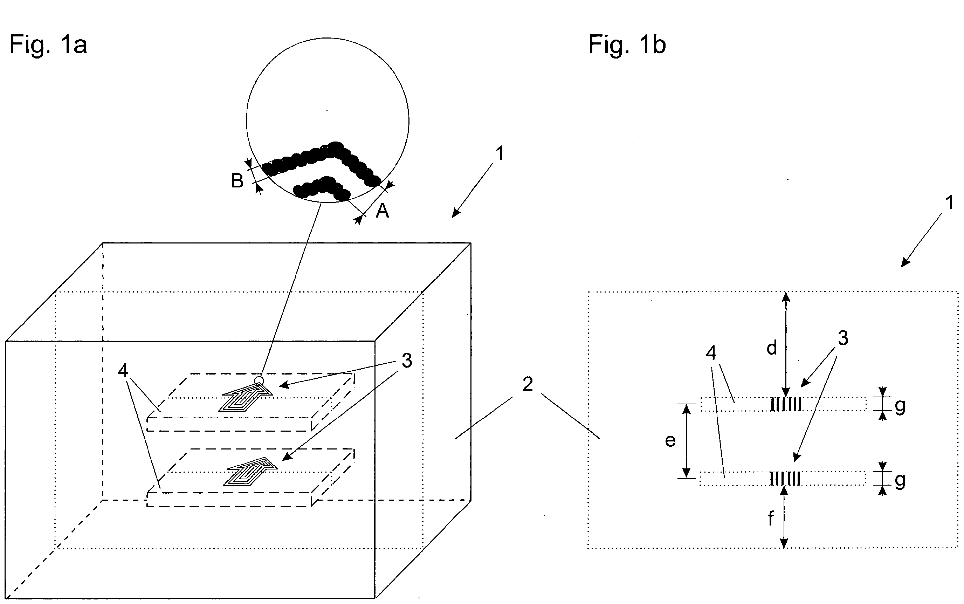

Fig. 1a dient der Veranschaulichung eines ersten bevorzugten Ausführungsbeispiels des erfindungsgemäßen Gegenstandes 1, der zumindest in einem Bereich 2 aus einem transparenten oder transluzenten Material, insbesondere aus Glas, besteht. In diesem Fall kommt das Moire-Muster durch die Überlagerung zweier gelaserter Rasterstrukturen 3 zustande, wobei sich die Rasterstrukturen 3 in verschiedenen Schichten 4 im Inneren des transparenten oder transluzenten Bereichs 2 befinden. Die Umrisse der Rasterstrukturen 3 (und damit der Umriss des Moire-Musters) stellen in diesem Fall als Motiv einen Pfeil dar. Die Rasterstrukturen 3 bestehen aus Linien. Ein Teil der Pfeilspitze der oberen Rasterstruktur 3 ist vergrößert dargestellt. In dieser Vergrößerung ist schematisch angedeutet, dass die Linien aus einzelnen Punkten zusammengesetzt sind - wie das bei der Herstellung des erfindungsgemäßen Gegenstandes 1 mit Hilfe eines gepulsten Lasers der Fall wäre. Natürlich ist es möglich, die einzelnen Punkte so dicht nebeneinander zu setzen, dass sie sich im Nachhinein nicht mehr voneinander unterscheiden lassen. Daher hat diese Fertigungsmethode wie weiter oben schon gesagt auch keine negativen Auswirkungen auf das Erscheinungsbild des Moire- Musters. In der vergrößerten Darstellung der Pfeilspitze sind die Spurweite einer Linie mit B und der Abstand der Mitten zweier benachbarter Linien mit A bezeichnet. Es sei noch angemerkt, dass die in der Vergrößerung dargestellten Punkte die visuellen, d.h. mit dem menschlichen Auge (z.B. unter einem Mikroskop) erkennbaren Kernbereiche der mit Hilfe des Laserlichts erzeugten Materialveränderungen andeuten sollen.

Fig. 1b zeigt einen Querschnitt des in Fig. 1a dargestellten ersten bevorzugten Ausführungsbeispiels des erfindungsgemäßen Gegenstandes 1. Die gezeigte Querschnittsebene ist in der Fig. 1a mit gepunkteten Durchtrittslinien angedeutet. Fig. 1b enthält unterschiedliche Bemaßungsvariablen: die Abstände d und f der Schichten 4 (und damit der Rastermuster 3) zur Ober- und Unterfläche des transparenten oder transluzenten Bereichs 2, den Abstand e zwischen den Schichten 4 sowie die Dicke g der Schichten 4. Die Dicke g ist dadurch festgelegt, dass die für die sichtbare Materialveränderung notwendige Laserintensität nur in einem begrenzten Bereich um den Fokus herum bereitsteht. Ist eine kleinere Dicke g gewünscht, so muss man den Öffnungswinkel im Fokus vergrößern, damit die Lichtintensität mit der Entfernung vom Fokus schneller abnimmt, und/oder die Laserleistung reduzieren. Der minimale Abstand, den die Schichten 4 aufweisen sollten, ist dadurch gegeben, dass die beiden Rasterstrukturen 3 visuell voneinander getrennt sind, damit ein dynamisches Moire-Muster zustande kommt. Das schließt aber nicht aus, dass sich die Rasterstrukturen 3 nicht in einem kleinen Bereich überlappen oder aneinander angrenzen können. In der Gesamtheit würde es sich in einem solchen Fall dann immer noch um ein dynamisches Moire-Muster im Sinne dieser Offenbarung handeln. Nach oben hin ist der Abstand e natürlicherweise dadurch begrenzt, dass das Moire-Muster ab einer bestimmten Größe des Abstandes verloren geht. Typerweise liegt diese Grenze im Bereich einiger weniger Millimeter. Spezialfälle des hier gezeigten Ausführungsbeispiels sind Ausführungsformen, bei denen d = 0 (die obere Rasterstruktur befindet sich an der Oberfläche) und/oder f = 0 (die untere Rasterstruktur befindet sich an der Unterfläche) ist.

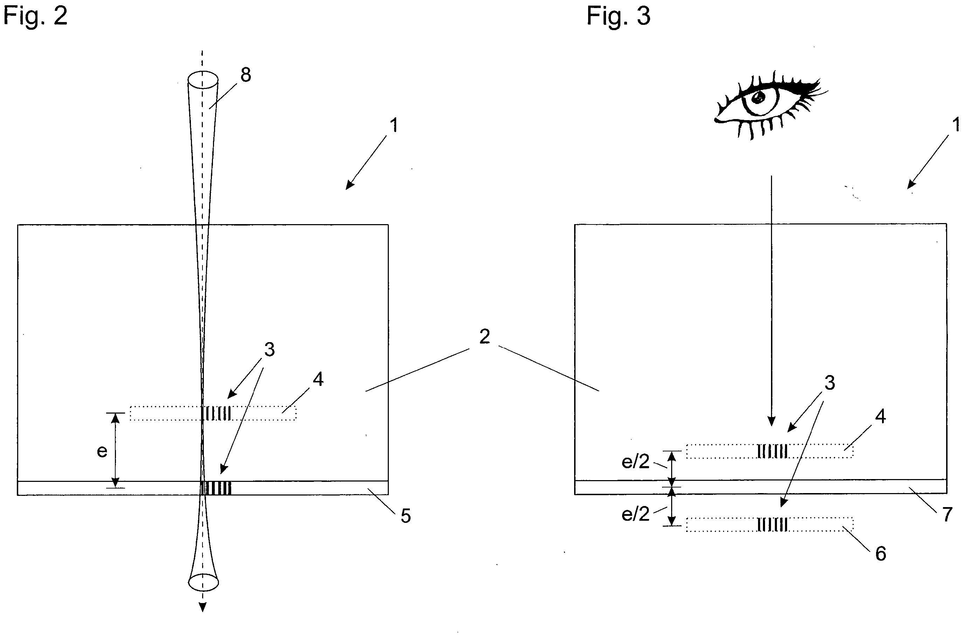

Fig. 2 dient der Veranschaulichung eines nicht-erfindungsgemäßen Ausführungsbeispiels. In diesem Fall kommt das Moire-Muster durch Überlagerung von genau zwei gelaserten Rasterstrukturen 3 zustande, wobei sich die beiden Rasterstrukturen 3 in einer Schicht 4 im Inneren und in der Beschichtung 5 einer

Oberfläche des transparenten oder transluzenten Bereichs 2 befinden. Es ist außerdem ein Laserstrahl 8 schematisch angedeutet, mit dessen Hilfe die beiden Rasterstrukturen 3 gleichzeitig erzeugt werden können. Die Propagationsrichtung des Laserstrahls 8 ist durch einen gestrichelten Pfeil markiert. Es wurde zeichnerisch ebenfalls der Tatsache Rechnung getragen, dass die Rasterstruktur in der Beschichtung 5 im Vergleich zu der im Inneren des transparenten oder transluzenten Bereichs 2 liegenden Rasterstruktur leicht verbreitert ist. Es sei darauf hingewiesen, dass die beiden Rasterstrukturen 3 auch unabhängig voneinander, in zwei zeitlich aufeinanderfolgenden Verfahrensschritten erzeugt werden können. Z.B. könnte man zuerst die Rasterstruktur im Inneren des transparenten oder transluzenten Bereichs 2 lasern, dann die Beschichtung 5 vornehmen und schließlich die Rasterstruktur in derselben erzeugen. Alternativ könnte man auch einen großen Öffnungswinkel im Fokus realisieren, so dass die Energie am Ort der Beschichtung 5 nicht mehr dazu ausreicht, um diese zeitgleich mit der Erzeugung der im Inneren liegenden Rasterstruktur zu modifizieren. Anschließend würde man den Fokus des Laserstrahls in die Beschichtungsebene verschieben und dort die Rasterstruktur lasern.

Fig. 3 dient der Veranschaulichung eines nicht-erfindungsgemäßen Ausführungsbeispiels. In diesem Fall kommt das Moire-Muster durch die Überlagerung zweier Rasterstrukturen 3 zustande, wobei sich die beiden Rasterstrukturen 3 in einer ersten Schicht 4 im Inneren des transparenten oder transluzenten Bereichs 2 und einer zweiten virtuellen Schicht 6, die sich durch Spiegelung der ersten Schicht 4 an einer Spiegelfläche 7 ergibt, befinden. Es muss also nur eine Rasterstruktur gelasert werden. Deren Spiegelbild ergibt dann die zweite (virtuelle) Rasterstruktur, wenn man von oben auf den Gegenstand 1 draufblickt.

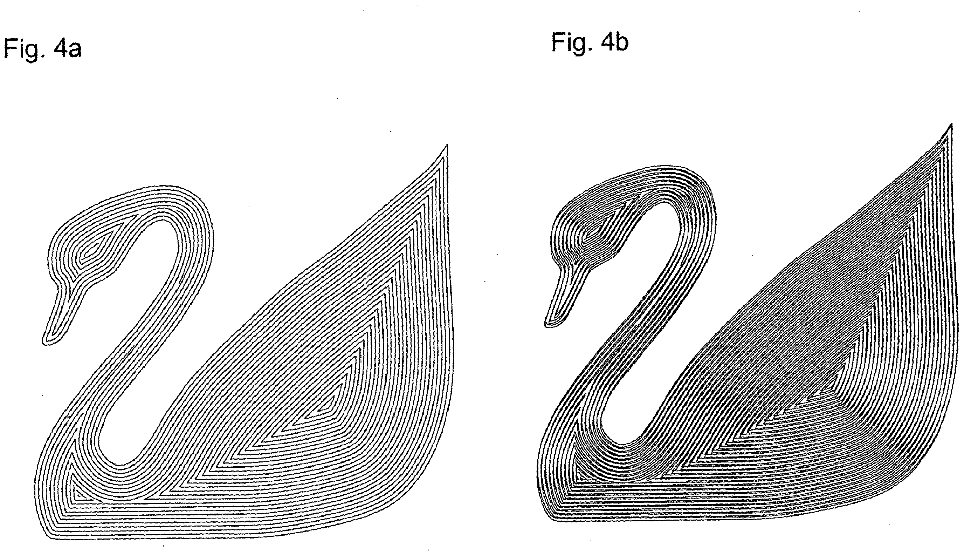

Fig. 4a zeigt die Draufsicht einer ersten beispielhaften Rasterstruktur, deren Umriss einen Schwan darstellt. Die Rasterstruktur besteht in diesem Fall aus mehreren Segmenten mit einer gleichen, aber gegeneinander gedrehten Rasterung: Die Rasterung besteht überall aus zueinander äquidistanten Linien, es sind aber mehrere Segmente voneinander unterscheidbar, an deren Trennungsgrenzen die Linien nicht "kontinuierlich" ineinander übergehen, sondern einen Knick aufweisen. Wie weiter oben beschrieben, weist der Schwan dadurch eine Innenstruktur auf. Z.B. sind ein Auge oder unterschiedliche Flügelpartien erkennbar. Die Rasterstruktur ist hier nur schematisch dargestellt. In Wirklichkeit hat sie beispielsweise eine Ausdehnung von ca. 7,5 Millimetern, die Spurweite einer Linie beträgt 10 Mikrometer und der Abstand der Mitten zweier benachbarter Linien 35 Mikrometer. In der Fig. 4b ist ein Moire-Muster dargestellt, das durch Überlagerung zweier identischer, nämlich der in Fig. 4a gezeigten, Rasterstrukturen zustande kommt. Es ist deutlich der optische Interferenzeffekt, der sich in einer Helligkeitsmodulation äußert, erkennbar. Aus darstellungstechnischen Gründen ist es hier nur möglich, ein starres Moire-Muster darzustellen. Wenn die beiden Rasterstrukturen aber in Realität zumindest bereichsweise visuell voneinander getrennt sind, so ändert sich bei einer leichten Änderung des Blickwinkels und/oder des Winkels der einfallenden Lichtstrahlen die Helligkeitsmodulation dynamisch - stufenlos und es ergibt sich ein dynamisches Moire-Muster.

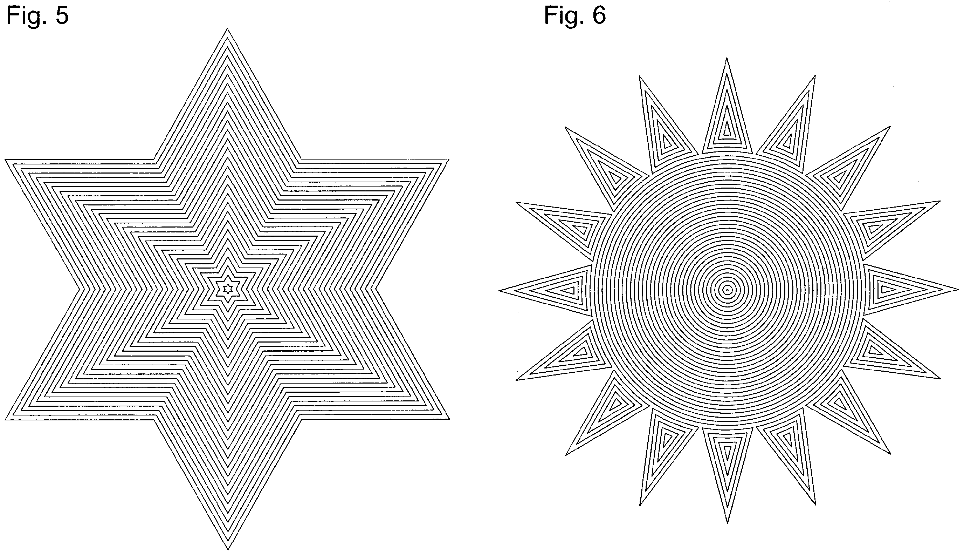

Die Figuren 5, 6, 7a und 7b zeigen die Draufsichten weiterer beispielhafter Rasterstrukturen, deren Umrisse Sterne bzw. die Sonne darstellen.

Die in der Fig. 6 gezeigte Rasterstruktur besteht aus Segmenten mit einer unterschiedlichen Rasterung: Bei der Rasterung im Sonneninneren handelt es sich um konzentrische Kreise, bei der Rasterung der Sonnenstrahlen um ineinander liegende Dreiecke, wobei jeweils eine Seite der Dreiecke leicht gekrümmt ist.

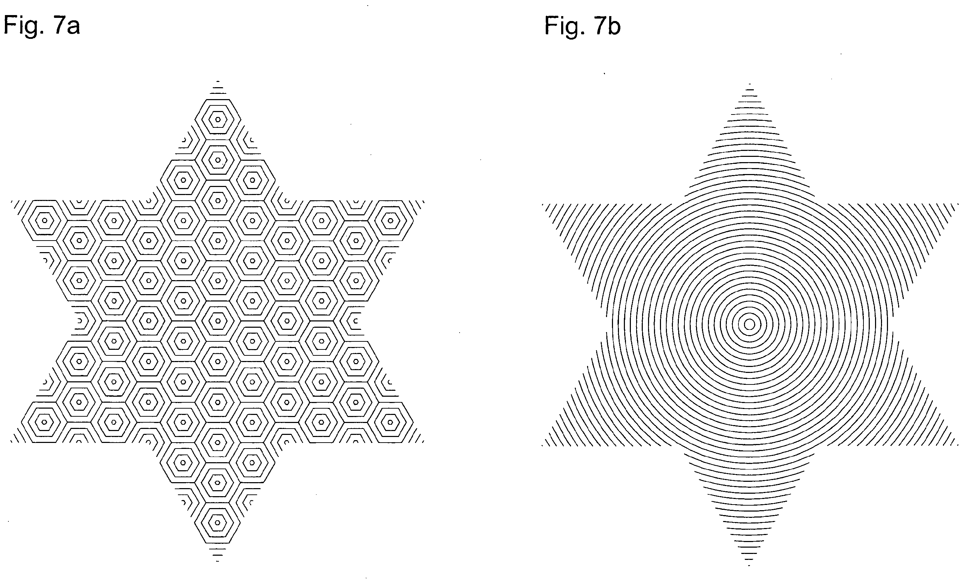

Wie weiter oben gesagt kann ein Moire-Muster auch durch die Überlagerung von Rasterstrukturen zustande kommen, die unterschiedlich ausgebildet sind. Beispielsweise lassen sich die beiden in den Figuren 7a und 7b gezeigten Rasterstrukturen zu einem Moire-Muster kombinieren.

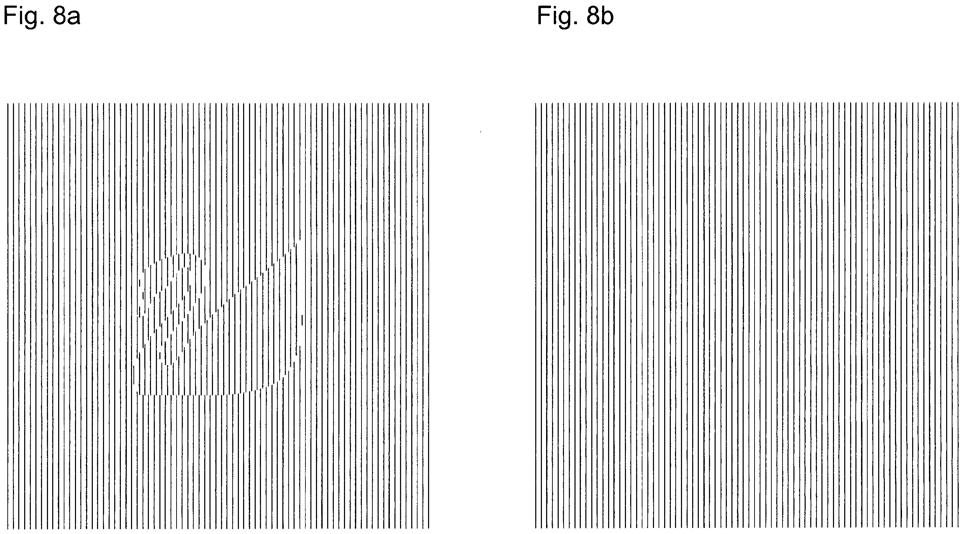

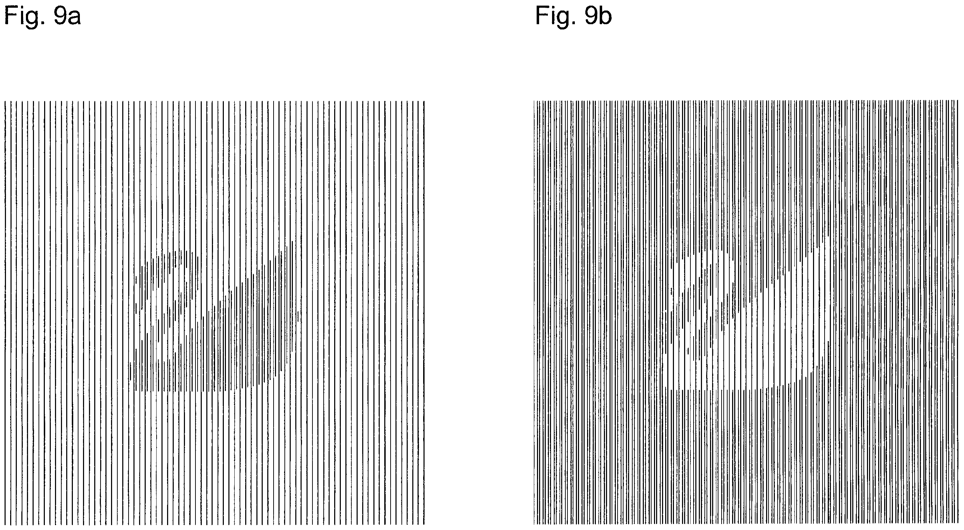

In den Figuren 8a und 8b sind zwei weitere beispielhafte Rasterstrukturen schematisch und in der Draufsicht dargestellt. Die in der Fig. 8a gezeigte Rasterstruktur besteht aus zwei Segmenten (nämlich dem Schwan in der Mitte und dem äußeren Rahmen) mit einer gleichen, aber leicht gegeneinander verschobenen Rasterung. Überlagert man nun diese Rasterstruktur mit der in der Fig. 8b gezeigten Rasterstruktur so kommen als Grenzfälle die beiden in den Figuren 9a und 9b schematisch dargestellten Moire-Muster zustande. Im ersten Grenzfall kommen die Linien des Rahmens mit den Linien des "Hintergrundrasters" in Deckung. Gleichzeitig entsteht der Eindruck, dass der Schwan eine doppelte Rasterung aufweist (und dadurch dunkler ist). Im zweiten Grenzfall ist das Gegenteil zutreffend. Wenn die beiden Rasterstrukturen nun zumindest bereichsweise visuell voneinander getrennt sind, so ändert sich bei einer leichten Änderung des Blickwinkels und/oder des Winkels der einfallenden Lichtstrahlen die Helligkeitsmodulation dynamisch - sprunghaft: Das Erscheinungsbild des Schwans "springt" im Vergleich zum äußeren Rahmen zwischen hell und dunkel hin- und her.

## Patentansprüche

1. Gegenstand (1), der als homogener Körper ausgebildet ist und aus einem für sichtbares Licht transparenten sprödharten Material besteht, wobei der Gegenstand (1) wenigstens zwei durch die Methode der Laserinnenmarkierung erzeugte, mit dem menschlichen Auge erkennbare, leicht milchige Rasterstrukturen (3) aufweist, **dadurch gekennzeichnet, dass** die Rasterstrukturen (3) aus Linien bestehenden, zumindest bereichsweise visuell voneinander getrennt sind, durch Überlagerung ein sich dynamisch bei einer leichten Änderung des Blickwinkels und/oder des Winkels der einfallenden Lichtstrahlen veränderndes Moire-Muster ergeben und sich in verschiedenen gekrümmten Schichten (4) im Inneren des Gegenstands (1) befinden, wobei die Rasterstrukturen (3) identisch ausgebildet sind, und eine der Rasterstrukturen (3)
- aus wenigstens zwei Segmenten mit einer unterschiedlichen Rasterung
- und/oder aus wenigstens zwei Segmenten mit einer gleichen, aber gegeneinander gedrehten Rasterung
- und/oder aus wenigstens zwei Segmenten mit einer gleichen, aber gegeneinander verschobenen Rasterung
besteht.

2. Gegenstand (1) nach Anspruch 1, **dadurch gekennzeichnet, dass** der Gegenstand (1) aus Glas besteht.

3. Gegenstand (1) nach Anspruch 1 oder 2, **dadurch gekennzeichnet, dass** der Gegenstand (1) genau zwei durch die Methode der Laserinnenmarkierung erzeugte Rasterstrukturen (3) aufweist.

4. Gegenstand (1) nach einem der Ansprüche 1 bis 3, **dadurch gekennzeichnet, dass** die Linien äquidistant zueinander angeordnet sind oder dass der Abstand (A) der Mitten zweier benachbarter Linien in einer vorbestimmten Weise variiert.

5. Gegenstand (1) nach einem der Ansprüche 1 bis 4, **dadurch gekennzeichnet, dass** das Verhältnis der Spurweite (B) einer Linie zum Abstand (A) der Mitten zweier benachbarter Linien zwischen 1:1,5 und 1:10 liegt und vorzugsweise 1:3,5 beträgt.

6. Gegenstand (1) nach Anspruch 5, **dadurch gekennzeichnet, dass** die Spurweite (B) einer Linie kleiner oder gleich 15 Mikrometer ist.

7. Verfahren zur Herstellung eines Gegenstandes (1) nach einem der Ansprüche 1 bis 6, **dadurch gekennzeichnet, dass** die Rasterstrukturen (3) durch die Methode der Laserinnenmarkierung mit Hilfe eines gepulsten Lasers erzeugt werden.

8. Verfahren nach Anspruch 7, **dadurch gekennzeichnet, dass** die Rasterstrukturen (3) nacheinander jeweils im Fokus des Laserstrahls (8) erzeugt werden.

## Claims

1. Object (1) that is formed as a homogeneous body and consists of a brittle material which is transparent to visible light, the object (1) comprising at least two slightly milky grid structures (3) which are produced by the methods of sub-surface laser marking and are visible to the human eye, **characterised in that** the grid structures (3) consist of lines, are visually separated from one another at least in regions, produce, by means of superimposition, a moire pattern which changes dynamically when the viewing angle and/or the angle of incident light beams changes slightly, and are located in different curved layers (4) inside the object (1), the grid structures (3) being identical and one of the grid structures (3) consisting of
- at least two segments having a different grid pattern
- and/or at least two segments having the same grid pattern, but rotated relative to one another
- and/or at least two segments having the same grid pattern, but displaced relative to one another.

2. Object (1) according to claim 1, **characterised in that** the object (1) consists of glass.

3. Object (1) according to either claim 1 or claim 2, **characterised in that** the object (1) comprises precisely two grid structures (3) produced by the methods of sub-surface laser marking.

4. Object (1) according to any of claims 1 to 3, **characterised in that** the lines are arranged so as to be equidistant from one another, or **in that** the spacing (A) between the centres of two adjacent lines varies in a specified manner.

5. Object (1) according to any of claims 1 to 4, **characterised in that** the ratio of the gauge (B) of a line to the spacing (A) between the centres of two adjacent lines is between 1:1.5 and 1:10, and is preferably 1:3.5.

6. Object (1) according to claim 5, **characterised in that** the gauge (B) of a line is less than or equal to 15 micrometres.

7. Method for producing an object (1) according to any of claims 1 to 6, **characterised in that** the grid structures (3) are produced by the methods of sub-surface laser marking, using a pulsed laser.

8. Method according to claim 7, **characterised in that** the grid structures (3) are produced one after the other, in the focus of the laser beam (8) in each case.

## Revendications

1. Objet (1) agencé en tant que corps homogène et constitué d'un matériau dur et cassant transparent pour la lumière visible, l'objet (1) présentant au moins deux structures en trame (3) légèrement laiteuses, perceptibles par l'oeil humain et générées par la méthode de marquage interne au laser, **caractérisé en ce que** les structures en trame (3) sont constituées de lignes, sont séparées visuellement les unes des autres au moins par endroits, produisent, par superposition, un motif moiré se modifiant de manière dynamique lors d'une légère modification de l'angle de vue et/ou de l'angle des rayons lumineux incidents et se trouvent à l'intérieur de l'objet (1) dans différentes couches (4) incurvées, les structures en trame (3) étant agencées à l'identique, et une des structures en trame (3) est composée
- d'au moins deux segments avec une trame différente
- et/ou d'au moins deux segments avec une trame identique, mais tournant l'une par rapport à l'autre
- et/ou d'au moins deux segments avec une trame identique, mais décalées l'une par rapport à l'autre.

2. Objet (1) selon la revendication 1, **caractérisé en ce que** l'objet (1) est en verre.

3. Objet (1) selon la revendication 1 ou 2, **caractérisé en ce que** l'objet (1) présente précisément deux structures en trame (3) créées par la méthode de marquage interne au laser.

4. Objet (1) selon l'une quelconque des revendications 1 à 3, **caractérisé en ce que** les lignes sont disposées de manière équidistantes l'une par rapport à l'autre ou que l'écart (A) des milieux de deux lignes voisines varie de manière prédéterminée.

5. Objet (1) selon l'une quelconque des revendications 1 à 4, **caractérisé en ce que** le rapport de l'écartement de voie (B) d'une ligne par rapport à l'écart (A) des milieux de deux lignes voisines est compris entre 1:1,5 et 1:10 et vaut de préférence 1:3,5.

6. Objet (1) selon la revendication 5, **caractérisé en ce que** l'écartement de voie (B) d'une ligne est inférieur ou égal à 15 micromètres.

7. Procédé de production d'un objet (1) selon l'une quelconque des revendications 1 à 6, **caractérisé en ce que** les structures en trame (3) sont créées grâce à la méthode de marquage interne au laser à l'aide d'un laser impulsionnel.

8. Procédé selon la revendication 7, **caractérisé en ce que** les structures en trame (3) sont créées l'une après l'autre respectivement dans le point focal du rayon laser (8).
